# EUROPÄISCHE PATENTSCHRIFT

(11) **EP 1 655 119 B1**
(45) Veröffentlichungstag und Bekanntmachung des Hinweises auf die Patenterteilung: **07.11.2007**
(21) Anmeldenummer: 05023597.7
(22) Anmeldetag: 28.10.2005
(51) Int. Cl.: B27D 5/00

(54) **Verfahren zum Fertigen von formatierten Leichtbauplatten**
Process for manufacturing sized lightweight boards
Procédé de fabrication de panneaux légers mis à dimension

(30) Priorität: 04.11.2004 DE 102004053881
(43) Veröffentlichungstag der Anmeldung: 10.05.2006
(73) Patentinhaber: IMA Klessmann GmbH Holzbearbeitungssysteme, 32312 Lübbecke (DE)
(72) Erfinder: Hucke, Helmut, 32312 Lübbecke (DE); Hollmer, Wilfried, 32369 Rahden (DE)
(74) Vertreter: Elbertzhagen, Otto

(56) Entgegenhaltungen:
- EP-A- 0 400 943
- EP-A- 0 880 920
- DE-A1- 2 357 051
- DE-U1- 9 107 431
- PATENT ABSTRACTS OF JAPAN Bd. 1998, Nr. 03, 27. Februar 1998 (1998-02-27) -& JP 09 290314 A (TOA CORP), 11. November 1997 (1997-11-11)

## Beschreibung

Die Erfindung bezieht sich auf ein Verfahren zum Herstellen von formatierten Leichtbauplatten gemäß dem Oberbegriff des Patentanspruchs 1.

Leichtbauplatten der genannten Art werden zunehmend im Möbelbau und im Innenausbau eingesetzt, weil sie aufgrund ihres Sandwichaufbaus leichter als im wesentlichen massive oder homogene Platten sind und auch die Verwendung von Recyclingprodukten für die Mittellage erlauben. Aufgrund ihres geringeren Gewichtes bieten Leichtbauplatten Vorteile beim Transport und bei der Handhabung, außerdem sind sie aufgrund der Sperrwirkung zwischen der Mittellage und den diese beplankenden Decklagen weitgehend verzugfrei.

Bei Platten aus herkömmlichen Materialien, die für Möbeltüren, Tisch- und Arbeitsplatten oder Paneele verwendet werden, werden auf die Schmalseiten Kantenstreifen, wie Dekorstreifen, im maschinellen Durchlaufverfahren aufgebracht, die auf dem massiven oder homogenen Plattenmaterial eine vollflächige Abstützung finden. Deshalb können die Kanten- oder Dekorstreifen aus dünnen biegsamen Materialien bestehen, die relativ leicht maschinell verarbeitet werden können. Anders verhält es sich bei Leichtbauplatten, deren Mittellage eine nur geringe oder ungleichmäßige Festigkeit aufweist. Hier stehen für den sicheren Halt der Kantenstreifen nur die Kantenbereiche der Deckplatten zur Verfügung, und deshalb müssen die die Mittellage abdeckenden Randleisten aus einem festen, relativ steifen Material bestehen, welches für die maschinelle Anbringung der Randleisten an den Plattenschmalseiten einen größeren Aufwand erfordert.

Der Erfindung liegt die Aufgabe zugrunde, ein Verfahren der eingangs genannten Art zu schaffen, welches die Kaschierung der Mittellage bei den formatierten Leichtbauplatten mittels der daran umlaufenden Randleisten vereinfacht.

Diese Aufgabe wird bei einem Verfahren der vorgenannten Art durch die kennzeichnenden Merkmale des Patentanspruchs 1 gelöst.

Für die Erfindung ist wesentlich, daß die bei den fertigen, formatierten Leichtbauplatten die Mittellage abdeckenden Randlei-sten aus dem in sich stabilen Material einer der Deckplatten bestehen und entsprechend an den formatierten Einzelplatten freigeschnitten werden. Der die jeweilige Randleiste bildende Randabschnitt der betreffenden Deckplatte wird deshalb in seiner Breite entsprechend der Dicke der gesamten Einzelplatte zugeschnitten und verbleibt an der Platte, womit die Zuführung eines separaten Leistenmaterials entfällt. Die Anwendung des Foldingverfahrens ermöglicht es, den die Randleiste bildenden Endabschnitt der Deckplatte maschinell synchron mit der gesamten Einzelplatte mitzuführen, wobei vorteilhaft der Endabschnitt mittels eines Materialsteges, der als Scharnier dient, mit der Einzelplatte verbunden bleibt. Weiter erleichtert das Foldingverfahren, bei dem der die Randleiste bildende Endabschnitt der betreffenden Deckplatte zunächst noch mit dieser in einer Ebene flachliegend angeordnet ist, die Auftragung des Klebers im Bereich zugänglicher Flächen, an denen im nachhinein der Endabschnitt beim Klappvorgang sowohl an der einen als auch an der anderen Deckplatte zur Anlage gebracht wird.

Weitere vorteilhafte Ausgestaltungsmerkmale der Erfindung ergeben sich aus den Unteransprüchen.

Die Erfindung wird nachfolgend anhand der Zeichnung noch näher erläutert. Dabei zeigen:
- Fig. 1: die Draufsicht auf eine großformatige Aus gangsplatte in der Ausführung als Leichtbauplatte,
- Fig. 2: einen Schnitt durch die Platte von Figur 1 entlang der dortigen Linie II-II,
- Fig. 3: die Draufsicht auf eine fertige, formatierte Leichtbauplatte,
- Fig. 4: einen Schnitt durch die formatierte Plat te gemäß Figur 3 entlang der dortigen Linie IV-IV,
- Fig. 5 - 10: jeweils einen Querschnitt durch den Randbereich einer zugeschnittenen Einzelplat te bei aufeinanderfolgenden Bearbeitungs schritten an einer der Plattenschmalsei ten.

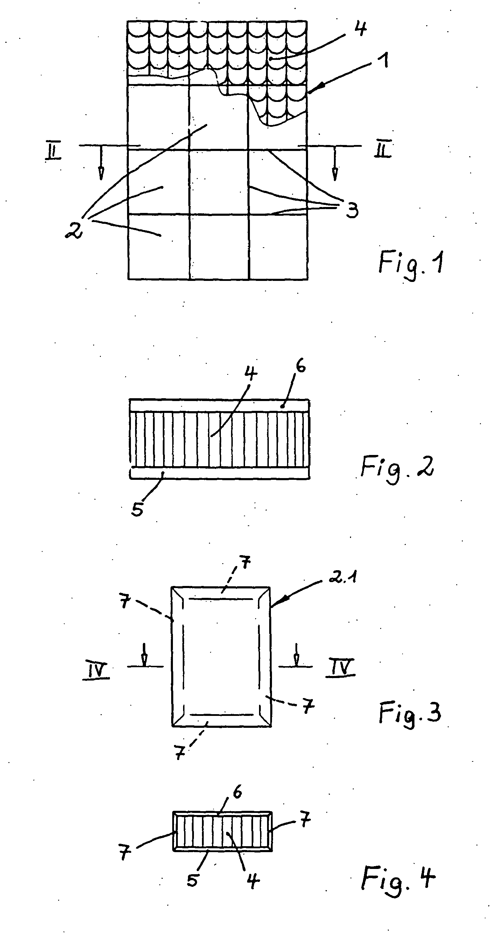

Im einzelnen zeigen die Figuren 1 und 2 eine großformatige Leichtbauplatte 1, die in Einzelplatten 2 aufgeteilt wird, wie es die in Figur 1 angedeuteten Schnittlinien 3 veranschaulichen.

Die großformatige Platte 1 weist Abmessungen in der Größenordnung von 2.000 mm x 5.000 mm auf, und die entsprechend im Format kleineren Einzelplatten 2 können untereinander gleiche oder verschiedene Abmessungen haben, je nachdem wie es für die Weiterverarbeitung der Einzelplatten 2 und für die optimale Ausnutzung der großformatigen Leichtbauplatte 1 erforderlich ist.

Der Aufbau der großformatigen Leichtbauplatte 1 und damit auch der Einzelplatten 2 ergibt sich aus Figur 2. Es handelt sich um einen Sandwichaufbau mit einer Mittellage 4, die aus einem leichten, instabilen Werkstoff besteht. Es kann sich um Papplagen mit einer Wabenstruktur, um einen geschäumten Kunststoff oder einen geblähten Mineralstoff oder um einen Verbund aus solchen Stoffen handeln. Diese Stoffe geringer Dichte haben keine ausreichende Festigkeit, um für sich allein zu einer stabilen Platte verarbeitet werden zu können, auch lassen sich damit keine glatten, geschlossenen Plattenoberflächen erzielen. An den Plattenbreitseiten ist die Mittellage 4 deshalb mittels einer unteren Deckplatte 5 und einer oberen Deckplatte 6 aus einem festen, steifen Material beplankt, was bedeutet, daß ein fester Verbund zwischen den Deckplatten 5, 6 und der Mittellage 4 mit einer dadurch erzielten Sperrwirkung ähnlich der von Sperrholz besteht. Im Verhältnis zur Dicke der Mittellage können die Deckplatten 5, 6 dünner ausgeführt sein, wobei jedoch eine der beiden Deckplatten 5, 6 eine noch ausreichende Dicke für die nachstehend erläuterte Bearbeitung aufweisen muß. Zumindest diese Deckplatte 5 oder 6 weist eine hohe Festigkeit vergleichbar der von Holz auf und besteht demgemäß aus höherwertigen, dichten Materialien, wie Holz, Holzfaserplatten oder Laminaten, was sich je nach dem Verwendungszweck der vornehmlich für den Möbelbau oder den Innenausbau vorgesehenen Bauteile richtet, zu denen die Einzelplatten 2 nach der nachfolgend beschriebenen Bearbeitung weiter verarbeitet werden.

Aus den Figuren 3 und 4 geht eine fertige, formatierte Leichtbauplatte 2.1 hervor, die sich von den Einzelplatten 2 dadurch unterscheidet, daß die Mittellage 4 des Sandwichaufbaus durch Randleisten 7 kaschiert ist, die in besonderer Weise aus dem Ma-terial der einen der beiden Deckplatten 5, 6 gebildet wird.

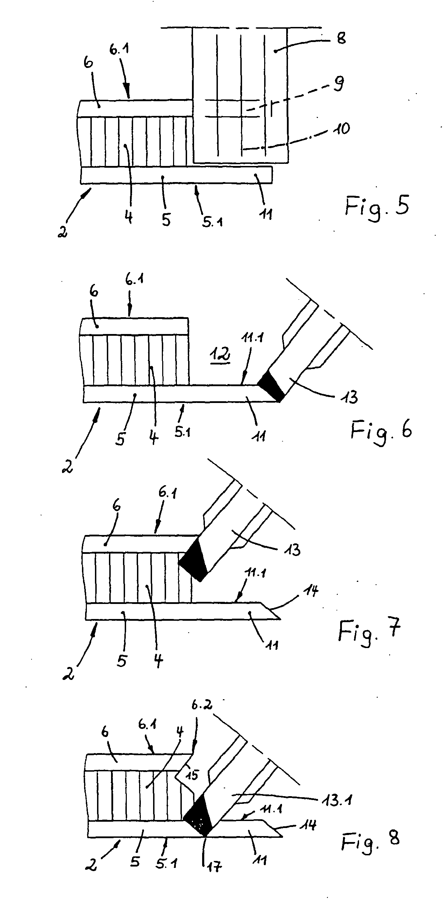

Der erste dazu erforderliche Bearbeitungsschritt ergibt sich aus Figur 5. Entlang der betreffenden Schmalseite der Platte 2 wird mittels eines Zerspanungswerkzeuges 8, wie einem Fräser, ein Randabschnitt 9 einer der beiden Deckplatten 5, 6, hier der oberen Deckplatte 6, weggeschnitten und gleichzeitig in gleicher Breite der Randbereich 10 der Mittellage 4 bis hin zu der unteren, zweiten Deckplatte 5 entfernt. Dies geschieht in der Weise, daß an der zweiten Deckplatte 5 ein über die erste Deckplatte 6 und die Mittellage 4 vorstehender Randabschnitt 1 verbleibt, dessen Breite gleich der Dicke der gesamten Einzelplatte 2 ist.

Wie Figur 6 zeigt, ist dadurch ein falzartiger Freiraum 12 gebildet, der von der Innenseite 11.1 des Randabschnitts 11 der zweiten Deckplatte 5 und von den nunmehr zurückspringenden Randbereichen der Mittellage 4 und der ersten Deckplatte 6 begrenzt ist. Mittels eines weiteren Zerspanungswerkzeugs 13 wird entlang der freien Endkante des Randabschnittes 11 der zweiten Deckplatte 5 eine Schrägfläche 14 angefräst, die u.a. in Figur 7 erkennbar ist. Relativ zu der Ebene, in der sich die Einzelplatte 2 erstreckt, verläuft die Schrägfläche 14 unter einem Winkel von 45 Grad, der den Kantenwinkel zur Außenseite 5.1 der zweiten Deckplatte 5 bildet. Wie Figur 7 weiter erkennen läßt, wird in gleicher Weise eine Schrägfläche 15 im Bereich der Endkante der ersten Deckplatte 6 angebracht, auch hier beträgt der Kantenwinkel zur Außenseite 6.1 der ersten Deckplatte 6 45 Grad.

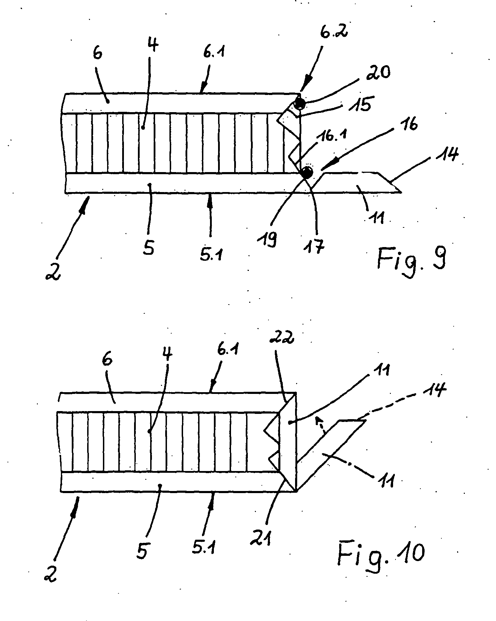

Wie aus den Figuren 8 und 9 hervorgeht, wird anschließend, vorzugsweise mit einem weiteren Schneidwerkzeug 13.1, von der Innenseite 11.1 her eine Gehrungsnut 16 in den Randabschnitt 11 der zweiten Deckplatte 5 eingeschnitten, deren Flankenwinkel 90 Grad beträgt. Der Scheitel dieser Gehrungsnut 16 befindet sich in der Vertikalprojektion auf die Innenseite 11.1 des Randabschnitts 11 gesehen exakt unter der Endkante 6.2 der oberen, ersten Deckplatte 6. Damit liegt die Gehrungsnut 16 mit ihrem Scheitel auf der Grenze, von der aus sich bis zur freiliegenden Endkante die Breite des Randabschnittes 11 der zweiten Deckplatte 5 bemißt. Mit dem Anschneiden der Schrägfläche 15 an der ersten Deckplatte 6 und dem Einschneiden der Gehrungsnut 16 in den Übergangsbereich zwischen der zweiten Deckplatte 5 und dem zugehörigen Randabschnitt 11 wird zugleich die Mittellage 4 noch weiter im Randbereich entfernt, was auch in einem getrennten Arbeitsschritt vorgenommen werden kann. Wichtig hierbei ist, daß die Mittellage 4 auch in demjenigen Raum entfernt ist, der sich zwischen der Schrägfläche 15 an der Kante der ersten Deckplatte 6 und der nach innen hin liegenden Flanke 16.1 der Gehrungsnut 16 erstreckt.

Die Gehrungsnut 16 wird so tief von der Innenseite 11.1 des Randabschnittes 11 her in die zweite Deckplatte 5 eingeschnitten, daß zwischen ihrem Scheitel und der Außenseite 5.1 der zweiten Deckplatte 5 bzw. deren Endabschnitts 11 ein Materialsteg 17 verbleibt. Dieser Materialsteg 17 fungiert als Scharnier, wie nachstehend noch erläutert werden wird.

Als nächstes wird, wie Figur 9 weiter veranschaulicht, auf die erwähnte innere Flanke 16.1 der Gehrungsnut 16 und die Schrägfläche 15 im Kantenbereich der ersten Deckplatte 6 je eine Kleberraupe 19, 20 eines geeigneten Klebers aufgetragen. Danach folgt ein Faltvorgang, der anhand von Figur 10 verdeutlicht ist. Unter Nutzung der Scharnierfunktion des Materialsteges 17 am Grund der Gehrungsnut 16 wird der Randabschnitt 11 der zweiten Deckplatte 5 unter Schließen der Gehrungsnut 16 umgeklappt, wobei die äußere Schrägfläche 14 am Endabschnitt 11 zur Anlage an der Schrägfläche 15 der ersten Deckplatte 6 kommt. Es bilden sich zwischen dem geklappten Endabschnitt 11 einerseits und der oberen ersten Deckplatte 6 sowie der unteren zweiten Deckplatte 5 andererseits Gehrungsfugen 21, 22 aus, in denen sich der in Form der Kleberraupen 19, 20 aufgetragene Kleber zu einer durchgehenden Klebschicht verteilt, so daß nach Erstarren des Klebers der Endabschnitt 11 in seiner umgeklappten Endlage sicher mit der ersten Deckplatte 6 und der zweiten Deckplatte 5 an der betreffenden Schmalseite der Einzelplatte 2 verbunden ist und die Mittellage 4 nach außen hin völlig abschließt.

Der beschriebene Vorgang wird an allen vier Schmalseiten jeder Einzelplatte 2 vorgenommen, wie anhand der Figuren 3 und 4 zu erkennen ist. Man erhält somit eine weiter verarbeitbare, formatierte Platte 2.1, bei der nicht nur die Mittellage 4 kaschiert ist, sondern die durch die eingeklebten Randabschnitte 11, die aus der betreffenden Deckplatte 5, 6 gebildet sind, stabilisiert ist. Die Bearbeitung an den Schmalseiten der Einzelplatten 2 wird auf einer Durchlaufmaschine im kontinuierlichen Durchlauf vorgenommen, welche entsprechende Bearbeitungsstationen aufweist.

## Patentansprüche

1. Verfahren zum Fertigen von formatierten Leichtbauplatten mit einer leichtgewichtigen instabilen Mittellage (4) und mit einer oberen Deckplatte (6) sowie einer unteren Deckplatte (5), die aus einem festen Werkstoff bestehen und mit denen die Mittellage beplankt ist, und ferner mit die Mittellage an den Plattenschmalseiten kaschierenden Randleisten (7), die mit den Kanten der beiden Deckplatte verklebt sind, wobei eine großformatige Leichtbauplatte (1), welche die leichtgewichtige Mittellage und die diese beplankenden Decklagen aufweist, in Einzelplatten mit an den Schmalseiten offener Mittellage aufgeteilt wird,
**dadurch gekennzeichnet,**
**daß** an jeder der Einzelplatten (2) an den Schmalseiten die jeweilige Randleiste aus einer der Deckplatten gebildet wird, indem von der ersten Deckplatte (6) ein Randstreifen und der benachbarte Randbereich der Mittellage bis hin zur Innenseite der zweiten Deckplatte (5) in einer Breite, die der gesamten Dicke der Einzelplatte entspricht, weggeschnitten werden, danach in die freiliegende Innenseite des vorstehenden Randabschnitts (11) der zweiten Deckplatte (5) eine Gehrungsnut (16) nahe der Mittellage eingeschnitten und anschlie-ßend im Foldingverfahren dieser Randabschnitt bis zur Anlage an der Kante der ersten Deckplatte geklappt wird, wobei zuvor in der Gehrungsnut und an zumindest einer der weiteren Kontaktflächen der ersten Deckplatte und des Randabschnitts der zweiten Deckplatte in deren Anlagebereich ein Kleber aufgetragen wird.

2. Verfahren nach Anspruch 1,
**dadurch gekennzeichnet,**
**daß** die Gehrungsnut (16) in die zweite Decklage mit einer solchen Tiefe eingeschnitten wird, daß zwischen dem Scheitel der Gehrungsnut und der Außenseite der zweiten Decklage ein als Scharnier beim Klappen des Randabschnitts dieser Decklage fungierender Materialsteg verbleibt.

3. Verfahren nach Anspruch 1 oder 2,
**dadurch gekennzeichnet,**
**daß** entlang der zur Anlage aneinander kommenden Kantenbereiche der ersten Decklage und des klappbaren Randabschnitts der zweiten Decklage zur Ausbildung einer dazwischenliegenden Gehrungsfuge Schrägflächen angeschnitten werden.

4. Verfahren nach einem der Ansprüche 1 - 3,
**dadurch gekennzeichnet,**
**daß** die Bearbeitung der Schmalseiten der Einzelplatten im maschinellen Durchlauf vorgenommen wird.

## Claims

1. Process for manufacturing sized lightweight boards with a lightweight unstable centre layer (4) and an upper covering panel (6) as well as a lower covering panel (5) which are made from a solid material and with which the centre layer is panelled, and furthermore with marginal strips (7) which cover the centre layer along the narrow sides of the board and which are stuck to the edges of the two covering panels, wherein a large-format lightweight board (1) which comprises the lightweight centre layer and the covering panels which cover same is divided into individual boards with the centre layer exposed along the narrow sides,
**characterised in that**
on each of the individual boards (2) on the narrow sides the relevant marginal strip is formed from one of the covering panels by cutting away from the first covering panel (6) an edge strip and the adjacent edge area of the centre layer up to the inside of the second covering panel (5) to a width corresponding to the overall thickness of the individual board, then cutting a mitred groove (16) into the exposed inner side of the,protruding edge section (11) of the second covering panel (5) close to the centre layer and then in the folding process folding this edge section up to bear against the edge of the first covering panel whereby previously in the mitred groove and on at least one of the further contact faces of the first covering panel and the edge section of the second covering panel an adhesive has been applied into the contact bearing area thereof.

2. Process according to claim 1,
**characterised in that**
the mitred groove (16) is cut into the second covering layer to such a depth that a material web remains between the apex of the mitred groove and the outer side of the second covering layer to function as a hinge when folding the edge section of this covering layer.

3. Process according to claim 1 or 2,
**characterised in that**
inclined faces are cut along the edge areas of the first covering layer and of the folding edge section of the second covering layer which come to bear against one another in order to form a mitre joint interposed between same.

4. Process according to one of claims 1 to 3,
**characterised in that**
the work on the narrow sides of the individual boards is undertaken in a continuous machining run.

## Revendications

1. Procédé pour la fabrication de panneaux légers, mis à dimension, avec une couche centrale (4) instable, légère, et avec une plaque de recouvrement supérieure (6) ainsi qu'avec une plaque de recouvrement inférieure (5), qui consistent en un matériau stable, et avec lesquelles la couche centrale est revêtue, et, en outre, avec des couvre-chants (7) qui, doublant les côtés étroits de la couche centrale, sont collées sur les chants des deux plaques de recouvrement, un panneau léger de grand format, qui présente la couche centrale légère et les deux couches de recouvrement qui revêtent celle-ci, est divisé en panneaux individuels avec une couche centrale ouverte sur les côtés étroits,
**caractérisé en ce que**
sur chacun des panneaux individuels (2), sur les côtés étroits, le couvre-chant respectif est formé par l'une des plaques de recouvrements, du fait qu'une bande marginale de la première plaque de recouvrement (6) et la zone marginale de la couche centrale voisine sont enlevées jusqu'à la face intérieure de la deuxième plaque de recouvrement (5), sur une largeur qui correspond à l'épaisseur totale du panneau individuel, ce après quoi une rainure en onglet (16) est taillée dans la face intérieure dégagée de la section marginale (11) en saillie de la deuxième plaque de recouvrement (5), à proximité de la couche centrale, et cette section marginale est ensuite repliée, selon le procédé folding, jusqu'à venir porter contre le chant de la première plaque de recouvrement, une colle étant appliquée auparavant dans ladite rainure en onglet et, au moins, sur une surface de contact de la première plaque de recouvrement et sur la section marginale de la deuxième plaque de recouvrement, dans la région de contact.

2. Procédé selon la revendication 1,
**caractérisé en ce que**
la rainure en onglet (16) est découpée dans la deuxième couche de recouvrement à une profondeur telle qu'entre le point le plus élevée de ladite rainure en onglet et la face extérieure de la deuxième couche de recouvrement, demeure une patte de matériau destinée à servir de charnière pour le pliage de la section marginale.

3. Procédé selon revendication 1 ou 2,
**caractérisé en ce que**,
le long des sections marginales de la première couche de recouvrement et de la section pliable de la deuxième couche de recouvrement, des chanfreins sont taillés pour former un joint en onglet entre elles.

4. Procédé selon l'une des revendications 1 à 3,
**caractérisé en ce que**
le traitement des côtés étroits des panneaux individuels est effectué mécaniquement en continu.
